# EUROPÄISCHE PATENTSCHRIFT

(11) **EP 0 759 126 B1**
(45) Veröffentlichungstag und Bekanntmachung des Hinweises auf die Patenterteilung: **31.07.2002**
(21) Anmeldenummer: 96904714.1
(22) Anmeldetag: 20.02.1996
(51) Int. Cl.: F16C 13/00, D21G 1/02

(54) **ELEKTROMAGNETISCHE WALZENANORDNUNG**
ELECTROMAGNETIC ROLLER ARRANGEMENT
ENSEMBLE ROULEAU ELECTROMAGNETIQUE

(30) Priorität: 22.02.1995 DE 19507828
(43) Veröffentlichungstag der Anmeldung: 26.02.1997
(73) Patentinhaber: EMS Elektromagnetische Systeme GmbH, 07554 Korbussen (DE)
(72) Erfinder: Rindfleisch, Hans-Jochen, Dr.-Ing., 12559 Berlin (DE)
(74) Vertreter: Treffurth, Manfred
(86) Internationale Anmeldenummer: DE9600339
(87) Internationale Veröffentlichungsnummer: WO9626369

(56) Entgegenhaltungen:
- EP-A- 0 021 297
- CH-A- 460 533
- DE-A- 3 212 834
- GB-A- 2 033 540
- GB-A- 2 058 246
- US-A- 3 456 582

## Beschreibung

Die Erfindung betrifft eine Anordnung von aufeinander zustellbaren, achsparallel gelagerten Walzen zur Erzeugung eines über die Walzenlänge gleichmäßig verteilten Preßdrucks für die Behandlung von bahnförmigen Materialien.

Derartige Walzenanordnungen sind z.B. in der Textilindustrie als Foulard und in der Papierindustrie als Kalander bekannt und kommen darüber hinaus auch in der Leder- und Kunststoffverarbeitung sowie in der Metallurgie zur Anwendung.

Bei der Auslegung und im Betrieb derartiger Walzenanordnungen bereitet die Herstellung und Aufrechterhaltung eines über die Arbeitsbreite der Walzen konstanten bzw. gleichförmig verteilten Preßdrucks im Arbeitsspalt Schwierigkeiten.
Diese werden im wesentlichen dadurch verursacht, daß die erforderliche Anpreßkraft in voller Höhe auf die Walzen an ihren Wellenenden eingeleitet wird. Dadurch kommt es infolge der Zusammendrückung an den Wellenenden zu einer Auswölbung der Walzen in entgegengesetzter Richtung, welche in axialer Mitte am größten ist. Aus diesem Grunde nimmt der Preßdruck zwischen den Walzen zur Mitte hin ab, wenn keine geeigneten Gegenmaßnahmen getroffen werden.

So ist es bekannt, den Walzenkörper ballig zu schleifen, um die Auswölbung auszugleichen. Abgesehen von dem hohen fertigungstechnischen Aufwand, wird mit einer solchen Maßnahme nur bei einer bestimmten Anpreßkraft eine gleichmäßige Verteilung des Anpreßdrucks längs des Arbeitsspalts erreicht.
Ist die Anpreßkraft kleiner, so nimmt der Anpreßdruck zur Walzenmitte hin zu, ist er größer, so nimmt er in gleicher Richtung ab.

Zur Vermeidung dieses Nachteils ist es bekannt, die Druckwalze als Hohlzylinder auszubilden und mit einer feststehenden Welle, einem sogenannten Querhaupt, zu versehen, auf den der Hohlzylinder an seinen Enden drehbar gelagert ist. Die Anpreßkraft wird an den Enden der feststehenden Welle eingeleitet, wobei sich diese zusammen mit dem Hohlzylinder in der zur einwirkenden Kraft entgegengesetzten Richtung auswölbt.
Der Auswölbung des Hohlzylinders wird nun dadurch entgegengewirkt, daß der Raum zwischen feststehender Welle und dem Hohlzylinder längs in zwei Kammern aufgeteilt wird. Die der Gegenwalze benachbarte Kammer ist mit einem Druckmedium gefüllt, mit Hilfe dessen in dieser Kammer ein Überdruck aufgebaut wird. Dadurch wölbt sich der Hohlzylinder in diesem Bereich gegen die feststehende Welle aus, womit die durch die Anpreßkraft verursachte Auswölbung kompensiert wird.
Die Abdichtung der Druckkammer gegen die in Umfangrichtung benachbarte, unter Normaldruck stehende Kammer bereitet erhebliche Schwierigkeiten, sowohl bei der Herstellung als auch beim Betrieb der Walze. Besonders betroffen hiervon ist die auf Gleitreibung beanspruchte Dichtungsstelle an der inneren Mantelfläche des Hohlzylinders.
Um diese Schwierigkeiten zu beheben, ist es bekannt, die Dichtungs- und die Lagerfunktion zu trennen, indem im Bereich der Druckkammer statt einer Druckflüssigkeit hydraulische oder pneumatische Druckelemente über die Walzenlänge verteilt zwischen feststehender Welle und Hohlzylinder angeordnet werden, die direkt auf den Arbeitsspalt, also die Berührungslinie mit der Gegenwalze, zur Einwirkung gebracht werden.
Aber auch hier hat sich bei einer Vielzahl unterschiedlicher Ausführungen herausgestellt, daß im Betrieb der Walzen Undichtigkeiten der Druckelemente und Verschleißerscheinungen in den Stützlagern der Druckelemente an den inneren Mantelflächen des rotierenden Hohlzylinders auftreten, welche aufwendige Instandhaltungsarbeiten erforderlich machen.

Es sind daher bereits verschiedene Walzenanordnungen bekannt geworden, die diese Nachteile dadurch vermeiden, daß die Auflagerkräfte zwischen den Druckelementen und der inneren Mantelfläche des Hohlzylinders von einem Magnetkissen, d.h. einem Magnetfeld zwischen zwei entgegengesetzt gepolten Magneten, aufgenommen werden. Eine solche Walzenanordnung ist z.B. in der Patentschrift DE 391 84 13 beschrieben. Zur Verwendung kommen dabei vorzugsweise Dauermagnete.

Es sind auch Walzenanordnungen bekannt, in denen die inneren Gegenkräfte für die Kompensation der Durchbiegung elektromagnetisch erzeugt werden. Ein Gegenlager für die Übertragung dieser Kräfte von der feststehenden Welle auf den Hohlzylinder ist dabei nicht mehr erforderlich. Eine solche Walzenanordnung ist in der Patentschrift DE 321 28 34 beschrieben. Hierbei erfolgt die Kompensation der Durchbiegung gleichmäßig über den gesamten Querschnitt des Hohlzylinders, so daß eine Deformation in Umfangrichtung weitgehend vermieden werden kann. Die feststehende Welle ist dabei als Polträger ausgebildet, auf dem die Erregerwicklungen für die Erzeugung des Magnetfeldes angeordnet sind. Wegen der bei Belastung entstehenden Auswölbung der Welle ist ein relativ großer radialer Abstand zwischen ihrem äußeren Umfang und der inneren Mantelfläche des Hohlzylinders erforderlich, da eine Berührung mit Sicherheit ausgeschlossen werden muß. Diesem radialen Abstand entspricht in dieser Anordnung aber gerade der Luftspalt des magnetischen Kreises, durch den bei vorgegebener Kompensationskraft die notwendige magnetische Durchflutung und damit die Höhe des dafür erforderlichen Stromes in den Erregerwicklungen bestimmt wird.

Nachteilig an dieser Walzenanordnung ist daher, daß ein hinsichtlich Betriebskosten unverhältnismäßig hoher Energiebedarf für die Erzeugung des magnetischen Feldes entsteht. Hinzu kommt, daß die radialen Abmessungen und die Masse der Walze durch die für einen wirksamen magnetischen Rückschluß erforderliche radiale Dicke des Walzenmantels erheblich vergrößert werden.

Wie alle Kompensationswalzen hat auch diese Walzenanordnung den Nachteil, daß die Preßkräfte über die Endlager der feststehenden Welle eingetragen werden müssen, was relativ breite Lager und stabile Walzengerüste und damit einen hohen konstruktiven Materialaufwand im Bereich der Walzenenden bedingt.

Diese Nachteile vermeidet eine elektromagnetische Preßwalze, die in der US- Patentschrift 345 65 82 beschrieben ist.
Hier werden beide, auf den Arbeitsspalt wirkende Walzen in den Magnetkreis einbezogen, wobei der Magnetkern mit den Erregerwicklungen in der einen Walze und der magnetische Rückschluß in der anderen Walze angeordnet ist. Die Masse des Magnetkreises ist somit auf beide Walzen verteilt.
Der Arbeitsspalt zwischen den Walzen bildet in dieser Anordnung einen Teil des Luftspaltes des Magnetkreises. Die Größe dieses Luftspaltes ist weitgehend unabhängig von der maximal auftretenden Belastung bzw. einer entsprechenden Auswölbung der Walzenwelle. Schon allein deswegen, weil eine solche Auswölbung nicht mehr auftritt.

Die Preßkräfte werden nun nicht mehr von außen über die Walzenlager in den Arbeitsspalt eingetragen, sondern im Luftspalt des Magnetkreises und damit im Arbeitsspalt selbst auf der ganzen magnetisch beaufschlagten Breite der Walze erzeugt.
Die Lager sind damit von den Preßkräften entlastet und müssen nur noch für die Eigenmasse der Walzen und die Antriebsleistung ausgelegt werden. Eine Belastung der Walzen führt dabei zu einer Verringerung des Luftspalts infolge der Zusammendrückung des Walzenbelags und des bandförmigen Materials und damit insgesamt zu einer Verringerung des Energiebedarfs für die Erzeugung des magnetischen Feldes.
In der genannten Patentschrift ist aber vorgesehen, den Magnetkreis in Walzenlängsrichtung in eine Vielzahl axial nebeneinander angeordneter, voneinander unabhängiger Einzelmagnetkreise aufzuteilen. Durch deren unterschiedliche Erregung kann eine beliebige Verteilung des Preßdrucks über die Arbeitsbreite der Walze hergestellt werden, soweit sie technologisch erwünscht ist. Allerdings wird diese Möglichkeit durch die Tatsache begrenzt, daß der magnetisch wirksame Luftspalt, der den notwendigen Erregerstrom in seiner Gesamtheit und damit den Energiebedarf und die Masse der Erregerwicklung bestimmt, gleich der feldstärkegewichteten Summe der Luftspalte der einzelnen Magnetkreise ist. Je feiner sich der Preßdruck längs des Arbeitsspaltes einstellen lassen soll, je größer also die Anzahl der Einzelmagnetkreise ist, desto höher wird somit zwangsläufig auch der Energiebedarf für die Erzeugung eines bestimmten, effektiven Mittelwerts dieses Preßdruckes. Das gleiche gilt auch für die Masse des Spulenmaterials, da jede Spule für die volle Luftspaltdurchflutung ausgelegt sein muß.
Der Nachteil der Walzenanordnung gemäß der US-A-3 456 582 besteht nun im wesentlichen darin, daß aufgrund der konstruktiven Ausbildung der Einzelmagnetkreise kein geschlossener Gesamtmagnetkreis vorhanden ist. Die Vielzahl der axial nebeneinander angeordneten Einzelmagnetkreisen bestehen und voneinander unabhängigen, so daß zwangsläufig ein unverhältnismäßig hoher Energiebedarf auch für die Erzeugung eines längs des Arbeitsspalts konstanten Preßdrucks entsteht.

Die Erfindung hat das Ziel, den Materialbedarf für die Herstellung und den Energiebedarf für den Betrieb einer elektromagnetischen Preßwalze in entscheidendem Maße zu senken.
Dabei soll eine Steuerung der Luftspaltinduktion längs des Arbeitsspaltes möglich sein, ohne daß dazu voneinander getrennte und für sich allein erregbare Magnetkreise erforderlich sind.

Diese Aufgabe wird mit den in Anspruch 1 genannten Mitteln gelöst, wobei der Magnetkern der einer Walze axial durchgängig in einer Richtung magnetisiert ist.
Unter Verwendung der in den Unteransprüchen aufgeführten Mittel ist dabei eine Gestaltung und Auslegung des Magnetmantels möglich, mit denen es gelingt, das Magnetmaterial unabhängig von seiner momentanen Lage beim Betrieb der Walzen in hohem Maße auszunutzen und die dabei infolge der Rotation der Walzen auftretenden Wirbelstromverluste zu minimieren.
Durch Unterteilung des Magnetkreises in mehrere parallele Zweige mit Hilfe mehrerer flanschförmiger Schenkel wird dabei eine gleichmäßige axiale Verteilung des aus der Erregerspule austretenden Flusses auf den Magnetmantel erreicht. Dazu sind die flanschförmigen Schenkel an ihrem inneren Umfang mit dem Magnetkern und an ihrem äußeren Umfang mit dem Magnetmantel magnetisch leitend verbunden.

Auch eine Variation der magnetischen Feldstärke längs des Arbeitsspaltes der Walze ist möglich, ohne daß hierzu zusätzliche, voneinander getrennte Magnetkreise benötigt werden. Dies wird dadurch erreicht, daß zwischen den Schenkeln paralleler Zweige des Magnetkreises relativ leistungsarme Steuerwicklungen angeordnet werden, mit denen je nach dem, ob eine Verstärkung oder eine Schwächung der Feldstärke längs des Arbeitsspaltes zu den Rändern der Walze hin beabsichtigt ist, eine zur Erregerwicklung gleichgerichtete oder entgegengesetzte Durchflutung in den Magnetkreis eingespeist wird. Für die Erzeugung einer gleichmäßig über die axiale Länge des Arbeitsluftspalts veränderlichen Induktion ist vorgesehen, daß der Magnetmantel im Gebiet zwischen zwei Magnetschenkeln, in dem sich eine Nebenschlußwicklung befindet, einen ringförmigen Luftspalt aufweist, der nicht breiter als der Arbeitsluftspalt ist. Damit wird erreicht, daß sich die Durchflutung der Nebenschlußwicklung als zusätzliche Durchflutung im Arbeitsluftspalt verstärkend bzw. schwächend auswirken kann. Gleichzeitig wird damit eine Aufteilung des magnetischen Flusses auf den Magnetmantel erreicht dergestalt, daß jedem einspeisenden Magnetschenkel ein bestimmter Teil des Magnetmantels fest zugeordnet ist. Durch eine solche Flußaufteilung ist eine optimale Materialausnutzung und eine Minimierung der Erregerleistung möglich.

Der Magnetkreis verbindet die beiden durch den Arbeitsspalt mechanisch voneinander getrennten Walzen der Walzenanordnung magnetisch untereinander. In seiner Grundform besteht der Magnetkreis aus einem aktiven und einem passiven Teil, zwischen denen der Arbeitsluftspalt angeordnet ist. Der aktive Teil befindet sich in der Walze, welche die Erregerwicklung enthält. Er setzt sich zusammen aus dem von der Erregerwicklung umschlossenen Magnetkern, den flanschförmigen Magnetschenkeln und dem durch den ringförmigen, radial über der Erregerwicklung angeordneten Nebenluftspalt in zwei Polflächen entgegengesetzter Polarität aufgeteilten Magnetmantel.
Der passive Teil befindet sich in der Walze, welche keine Erregerwicklung enthält. Er besteht aus dem axial durchgehenden Magnetmantel, der hier den magnetischen Rückschluß zwischen den beiden Polflächen des aktiven Teils herstellt.

Der gesamte magnetische Fluß, der aus der Polfläche auf der einen Seite des ringförmigen Nebenluftspaltes aus dem Magnetmantel des aktiven Teils durch den Arbeitsluftspalt in den Magnetmantel des passiven Teils eingetreten ist, gelangt durch den magnetischen Rückschluß auf die andere Seite des ringförmigen Nebenluftspalts. Er durchflutet von dort nochmals den Arbeitsluftspalt und tritt dabei in die andere Polfläche des Magnetmantels des aktiven Teils des Magnetkreises ein. Der Arbeitsluftspalt wird somit auf seiner gesamten Länge, mit der er sich über die ganze Arbeitsbreite der Walzen erstreckt, nur einmal in zwei benachbarten Teilabschnitten gegensinnig durchflutet. Die für die ganze Erregerleistung insgesamt wirksame Luftspaltdicke beträgt somit im Unterschied zu der bereits bekannten Anordnung nur einmal das Doppelte der Dicke des geometrischen Luftspalts. Die Unterteilung des Arbeitsluftspaltes auf seiner Länge in mehrere Abschnitte und deren Zuordnung zu voneinander unabhängigen Magnetkreisen bedingt dagegen ein Mehrfaches der gemäß der Erfindung erforderlichen Erregerleistung.

Außer durch die Erregerleistung wird der Energiebedarf der Walzenanordnung durch Wirbelstromverluste bestimmt, die durch induzierte Spannungen in allen elektrisch leitenden Teilen der Walzenkonstruktion hervorgerufen werden, in denen sich das magnetische Feld bei der Drehung der Walzen bewegt bzw. die sich selbst relativ zum magnetischen Feld bewegen.

Nach an sich bekannten Bauregeln werden die Wirbelstromverluste dadurch auf ein vertretbares Maß abgesenkt, daß die betroffenen Konstruktionsteile aus dünnen, gegeneinander elektrisch isolierten Blechen oder Platten zusammengesetzt sind. Die Blech- bzw. Plattenebene ist dabei so angeordnet, daß sie mit der Ebene zusammenfällt, welche zwischen den Richtungen der Relativgeschwindigkeit der Bewegungen und des magnetischen Flusses aufgespannt ist. Dabei sind die gegenseitigen Bewegungen des betrachteten Bauteils und des in ihm vorhandenen Feldvektors in die Bestimmung des Geschwindigkeitsvektors einzubeziehen.

Der Flußvektor hat in den unterschiedlichen Gebieten des Magnetkreises axiale, radiale bzw. tangentiale Richtung. Für den Aufbau der einzelnen Bauteile aus gegeneinander isolierten Schichten von Magnetmaterial stehen mehrere konstruktive Ebenen zur Verfügung, die sich in axialer, radialer oder in tangentialer Richtung erstrecken.
Bei der diesbezüglichen Gestaltung des Magnetkreises hat es sich als vorteilhaft herausgestellt, den Magnetmantel aus zwei koaxialen, radial benachbarten Zylindern aufzubauen.

Dabei dient der innere Zylinder bei Verwendung üblichen Magnetmaterials der Verteilung des magnetischen Flusses in axialer Richtung, während der äußere Zylinder die Zuführung des magnetischen Flusses zum Arbeitsluftspalt übernimmt, wobei der magnetische Fluß hier vorwiegend in tangentialer und in radialer Richtung fließt.

Der innere Zylinder des Magnetmantels ist aus bahn- bzw. bandförmigem, elektrisch isoliertem Material aufgewickelt, wobei die elektrische Isolierung aus nichtmagnetischem Material besteht. Damit wird erreicht, daß sich der magnetische Fluß hier vorwiegend in axialer Richtung ausbildet. Nur in den radial äußeren Randzonen des inneren Zylinders wird der Fluß in radiale Richtung auf den äußeren Zylinder des Magnetmantels zu umgelenkt. Zusätzlich zur axialen Führung des Flusses wird durch die lagenweise gewickelte Anordnung des bahnförmigen, isolierten Magnetmaterials erreicht, daß Wirbelströme und durch sie verursachte Erregerverluste weitgehend unterdrückt werden. Die zylinderförmig gekrümmten Bahnen liegen genau in der durch die Richtungen von Geschwindigkeit und magnetischem Fluß aufgespannten Ebene. Hierbei wird davon ausgegangen, daß das magnetische Feld als örtlich stationär betrachtet werden kann und der innere Zylinder des Magnetmantels eine Drehbewegung ausführt.

Längs der äußeren Mantelfläche des inneren Zylinders tritt der magnetische Fluß radial in den äußeren Zylinder des Magnetmantels ein. Der äußere Zylinder ist aus dünnen kreisringförmigen elektrisch gegeneinander isolierten Scheiben aufgebaut, die in axialen Ebenen aneinander geschichtet sind. Die elektrische Isolierung besteht aus nichtmagnetischem Material. Durch diesen schichtweisen Aufbau des äußeren Zylinders wird erreicht, daß der magnetische Fluß in radialer und in Umfangsrichtung unter gleichmäßiger Nutzung des Magnetmantels dem Arbeitsluftspalt zugeführt wird. Ein magnetischer Querfluß wird dabei weitgehend unterdrückt.

Am Übergang zwischen innerem und äußerem Zylinder und im Bereich der aktiven Zone hat der Fluß radiale Richtung, dazwischen fließt er in Umfangsrichtung. Somit liegen die isolierten, kreisringförmigen Scheiben in der durch die Richtungen von magnetischem Fluß und Geschwindigkeit aufgespannten Ebene, so daß mit der Flußführung nicht nur eine gleichmäßige Flußverteilung sondern auch die angestrebte Minimierung der Wirbelstromverluste erreicht wird. Hierbei wird ebenfalls davon ausgegangen, daß das magnetische Feld als örtlich stationär betrachtet werden kann und der äußere Zylinder des Magnetmantels eine Drehbewegung ausführt.

An der äußeren Mantelfläche des radial inneren Zylinders zeigt die magnetische Feldstärke in radiale Richtung. Daher wird hier eine elektrische Spannung induziert, deren Feldstärke in axialer Richtung liegt.
Diese Spannung wird hier jedoch nicht durch elektrische Auftrennung der wirksamen Induktionslänge in elektrisch isolierte Teilstrecken minimiert. Sie liegt vielmehr in voller Höhe zwischen den Enden der zylinderförmig aufgewickelten Blechbänder an. Solange diese Spannungen aber am Umfang überall gleich sind, können sie keinen Strom antreiben und sind somit unschädlich.
Dies trifft für jede Windung des Mantels zwar annähernd zu. Von Blechwindung zu Blechwindung ergeben sich jedoch Spannungsunterschiede, da die radiale Komponente der magnetischen Feldstärke von der äußeren Mantelfläche nach radial innen abnimmt. Durch diese Spannungsunterschiede werden Ausgleichströme zwischen den Blechwindungen angetrieben, die zusätzliche Energieverluste hervorrufen und gleichzeitig die gleichmäßige Flußverteilung stören.
Um diese Ausgleichsströme zu unterdrücken, kann es vorteilhaft sein, den radial innen liegenden Zylinder des Magnetmantels aus gegeneinander elektrisch isolierten Zylinderschalen aufzubauen, die in Umfangsrichtung nebeneinander und in radialer Richtung in mehreren Schichten übereinander angeordnet sind.
Der zylinderförmige Spalt über dem radial inneren Zylinder kann in diesem Fall als eine Bandage ausgebildet sein, welche die Zylinderschalen formschlüssig aufeinanderpreßt.

Durch den ringförmigen Nebenluftspalt zwischen den beiden Teilen des Magnetmantels der aktiven Walze geht ein Teil des Flusses für die Erzeugung der Anpreßkraft verloren. Um diesen Anteil möglichst gering zu halten, kann der Nebenluftspalt entsprechend groß bemessen werden. Dadurch geht aber wirksame Arbeitsluftspaltlänge verloren. Es kann daher vorteilhaft sein, den Abstand zwischen den kreisscheibenförmigen Blechen des radial äußeren Zylinders des Magnetmantels zum Nebenluftspalt hin zu vergrößern. Damit wird erreicht, daß die magnetische Querleitfähigkeit des äußeren Zylinders des Magnetmantels zum Nebenluftspalt hin verringert und damit ein zu großer magnetischer Querabfluß wirksam unterdrückt wird.

Die Voraussetzung eines örtlichen stationären magnetischen Feldes gilt nur für eine Walzenanordnung, in welcher die Erregerwicklung selbst keine Drehbewegung ausführt. Dies ist zum Beispiel der Fall bei einer Walze mit einem feststehenden Querhaupt, auf welchem der Magnetmantel drehbar gelagert ist und auf dem die Erregerwicklung mit dem Magnetkern und den flanschförmigen Magnetschenkeln verdrehfest angeordnet sind.

Führt die Erregerwicklung eine Drehbewegung aus, so dreht sich mit ihr auch das von ihr erzeugte magnetische Feld.
Jedes geschlossene Flußelement ist für sich mit einem bestimmten Umfangselement der Erregerwicklung verkettet und folgt mit seinem Weg durch den Magnetkreis der Bewegung dieses Elements. Dabei kann davon ausgegangen werden, daß eine Relativbewegung zwischen magnetischem Flußvektor und Bauteilen der Walze und damit die Induktion von Wirbelströmen überall da ausgeschlossen ist, wo der Fluß radialsymmetrisch verteilt ist. Dies gilt in jeder Ausführung der erfindungsgemäßen Walzenanordnung für den Magnetkern und die flanschförmigen Magnetschenkel.

In einer, besonders vorteilhaften Ausführung der Walzenanordnung wird dies auch für den inneren Zylinder des Magnetmantels erreicht. Dazu ist zwischen dem radial inneren und dem radial äußeren Zylinder des Magnetmantels ein zylinderförmiger Spalt aus nichtmagnetischem Material mit einer im Vergleich zum Arbeitsluftspalt geringen Breite vorgesehen.

Damit wird am Übergang zwischen den beiden Zylindern des Magnetmantels eine radialsymmetrische Flußverteilung erzwungen, die eine am ganzen Umfang konstante Flußdichte hervorruft, deren Vektor ausschließlich in radiale Richtung zeigt. In dieser Anordnung kann daher nicht nur der Magnetkern zusammen mit den flanschförmigen Magnetschenkeln sondern auch der innere Zylinder des Magnetmantels aus massivem ferromagnetischen Material bestehen.
Im radial äußeren Zylinder des Magnetmantels ändert das Flußelement wegen der gleichmäßigen axialen Flußverteilung im zylinderförmigem Spalt seine axiale Lage bei Drehung der Walze nicht. Es verändert sich lediglich die Lage seines Wegs in Umfangrichtung von radial außen nach radial innen, wenn das mit ihm verkettete Umfangselement der Erregerwicklung sich auf die aktive Zone der Walzenanordnung, also auf den Arbeitsluftspalt, zubewegt. Dabei wandert das Flußelement gleichzeitig am Umfang vom Rand in das Zentrum der aktiven Zone. Durch diese Relativbewegungen des Feldstärkevektors werden im äußeren Zylinder des Magnetmantels Spannungen induziert, deren elektrischer Feldstärkenvektor in axiale Richtung zeigt. Die Ausbildung von Wirbelströmen wird aber durch die axiale Schichtung des Magnetmaterials wirksam unterbunden.
Durch die in der Regel nichtmagnetische elektrische Isolierung zwischen den Magnetblechen des radial innen liegenden Zylinders des Magnetmantels ergibt sich mit zunehmender Entfernung vom einspeisenden Magnetschenkel eine Zunahme des wirksamen magnetischen Luftspaltes auf dem Weg des Flusses in den zylinderförmigen Spalt. Einer dadurch bedingten Abnahme der radialen Flußdichte in axialer Richtung kann dadurch begegnet werden, daß die Wandstärke des zylinderförmigen Spaltes in dieser Richtung entsprechend reduziert wird. Vorteilhaft kann es aber bei vorhandenem zylinderförmigen Spalt auch sein, die elektrische Isolierung des Bleches aus magnetisch leitendem Material, z.B. geeigneten Metalloxyden, herzustellen.

Soll auf den zylinderförmigen Spalt zwischen den Zylindern des Magnetmantels verzichtet werden, so kann eine gleichmäßige Flußverteilung in Umfangs- und Axialrichtung auch dadurch erzwungen werden, daß der radial innere Zylinder aus streifenförmigen, gegeneinander elektrisch und magnetisch isolierten Blechen aufgebaut ist, welche in Umfangsrichtung aneinander geschichtet sind. In diesem Fall können sich die induzierten Spannungen zwar voll wirksam ausbilden. Sie treiben jedoch in der Blechebene Kreisströme an, die in entgegengesetztem Drehsinn das Blech durchfluten. Durch eine geeignete Dimensionierung der Blechstreifen, insbesondere durch eine elektrisch wirksame, magnetisch aber unbedeutende Unterteilung der Blechstreifen in mehrere axiale Abschnitte unterschiedlicher Länge, kann dafür gesorgt werden, daß sich die induzierten Spannungen in ihren Wirkungen weitgehend aufheben.

Außer der Wanderung in radialer und in Umfangsrichtung findet keine weitere Bewegung des magnetischen Feldstärkevektors statt. Das magnetische Feld tritt daher nach außen (relativ zu einem festen Raumpunkt) als Rotationsfeld in Erscheinung. Dabei ist die Rotationsgeschwindigkeit des Feldstärkevektors im Bereich der aktiven Zone bedeutend kleiner als die Rotationsgeschwindigkeit der Walze, so daß das Feld als annähernd stationär betrachtet werden kann. Dieser Sachverhalt kann vorteilhaft genutzt werden, wenn die passive Walze mit einem zweiteiligen Magnetmantel versehen ist, dessen innerer Zylinder feststeht. Zwischen beiden Zylindern ist ein zylinderförmiger Spalt angeordnet. Der äußere Zylinder ist drehbar auf dem inneren Zylinder gelagert. Dieser wird von einem feststehenden Querhaupt getragen.

Nur der innere Zylinder des Magnetmantels dient hier als magnetischer Rückschluß. Da das magnetische Feld als quasi stationär zu betrachten ist, kann er aus massivem ferromagnetischen Material bestehen.
Der äußere Zylinder überträgt den magnetischen Fluß auf den Arbeitsluftspalt und dient der Erzeugung der Anpreßkraft zwischen den rotierenden Walzen. Bei seiner Bewegung im annähernd stationären Luftspaltfeld wird eine Spannung erzeugt, deren elektrischer Feldstärkevektor in axiale Richtung zeigt.

Eine wirksame Unterdrückung von Wirbelströmen kann sowohl durch eine axiale Schichtung als auch durch eine Schichtung in Umfangsrichtung erreicht werden. Sowohl Aufbau der Schichtung als auch Materialdicke des äußeren Zylinders können dabei ausschließlich nach mechanischen Gesichtspunkten bestimmt werden.
Der Aufbau des äußeren Zylinders aus streifenförmigen elektrisch gegeneinander isolierten Blechen, die in Umfangsrichtung aneinander geschichtet sind, kann vorteilhaft sein, wenn es auf eine hohe Biegesteifigkeit und Formbeständigkeit des Walzenmantels ankommt.
Bei diesem Aufbau des Zylinders ist ein ringförmiger Spalt aus nicht magnetischem Material etwa in axialer Mitte des Magnetmantels vorgesehen, der schmaler, höchstens gleich breit wie der ringförmige Nebenluftspalt im Magnetmantel der zum aktiven Magnetkreis gehörenden Walze ist. Damit wird erreicht, daß der magnetische Fluß den äußeren Zylinder nur in radialer Richtung durchflutet und eine örtliche Überlastung des Magnetmaterials durch zusätzliche axiale Flußanteile nicht eintreten kann.

Kann das magnetische Feld aufgrund einer nicht mehr vernachlässigbaren Umfangsgeschwindigkeit des Feldstärkevektors nicht mehr als stationär betrachtet werden, so muß auch der innere Zylinder des Magnetmantels der passiven Walze einen geschichteten Aufbau erhalten, um Wirbelstromverluste zu vermeiden. Die Schichtung muß in radialer Richtung erfolgen, da der Feldstärkevektor in axiale Richtung weist und sich in Umfangsrichtung bewegt. Der innere Zylinder ist daher zweckmäßig aus dünnem, elektrisch isoliertem Blech aufgewickelt.
Dabei ist es weiterhin zweckmäßig, den inneren und den äußeren Zylinder auf ihren einander zugewandten Seiten so auszubilden, daß sie als koaxiale Zylinder auf der ganzen magnetisch wirksamen Polbreite des Magnetkreises kegelförmig aneinandergrenzen. Und zwar jeweils gegenläufig auf jeder der beiden Polseiten dergestalt, daß der Außendurchmesser des inneren Zylinders mit zunehmendem Fluß zunimmt bzw. mit abnehmendem Fluß abnimmt. Damit wird eine gleichmäßige Flußverteilung, insbesondere an den Stellen erreicht, an welchen der magnetische Fluß aus der radialen in die axiale Richtung bzw. von der axialen in die radiale Richtung umgelenkt wird. Gleichzeitig wird damit erreicht, daß der Fluß stets parallel zu den Blechschichten verläuft, so daß keine zusätzlichen Wirbelstromverluste auftreten. Außerdem wird damit erreicht, daß der Fluß nicht durch die unmagnetische elektrische Isolierung der Bleche hindurchtreten muß, womit eine unerwünschte Erhöhung der Erregerleistung vermieden wird.

Ein besonders einfacher Aufbau des Magnetmantels läßt sich mit einem bahn- bzw. bandförmigen Magnetmantel erreichen, welches eine sehr geringe elektrische Leitfähigkeit besitzt, wenn dabei gleichzeitig ein Isoliermaterial Verwendung findet, welches magnetisch leitend ist. Die elektrische Leitfähigkeit des Magnetmaterials ist dabei so gering, daß die in der Schichtebene erzeugten elektrischen Spannungen keine nennenswerten Wirbelströme antreiben können. Andererseits muß die magnetische Leitfähigkeit der elektrischen Isolierung so groß sein, daß sie dem magnetischen Fluß quer zur Schichtungsebene einen nur geringen Widerstand entgegensetzt, der die Erregerleistung nicht merklich erhöht. Die gewünschten elektrischen Eigenschaften hat amorphes Magnetmaterial, sogenanntes Glasmetall, das in dünnen Bändern durch Abschrecken aus der Schmelze hergestellt wird. Als magnetisch leitendes Isoliermaterial kommen verschiedene ferritische Werkstoffe in Betracht, mit welchen das bandförmige Magnetmaterial durch Aufdampfen beschichtet werden kann.

Die Erfindung ist nachstehend an einem Ausführungsbeispiel näher erläutert. Die zugehörigen Zeichnungen zeigen:
- Fig. 1 :: den Magnetkreis und das Flußschema im Längsschnitt der Walzenanordnung
- Fig. 2:: den Magnetkreis und das Flußschema in zwei ausgewählten Querschnitten der Walzenanordnung

Im Flußschema geben Pfeile die Richtung des magnetischen Flusses in der Zeichenebene, Kreuze und Punkte die Richtung des Flusses senkrecht zur Zeichenebene an.
Dabei bedeutet das Kreuz einen von oben in die Zeichenebene eintretenden, der Punkt einen senkrecht von unten aus der Zeichenebene austretenden Flußvektor. Analoges gilt für den Vektor der elektrischen Stromdichte in der Erregerwicklung.

Die elektromagnetische Walzenanordnung besteht aus der magnetisch passiven Walze 1 und der magnetisch aktiven Walze 2 mit der Erregerwicklung 3 und den Steuerwicklungen 14. Die Walzen 1 und 2 sind durch den Magnetkreis der Walzenanordnung aufeinander abrollbar untereinander verbunden und an den Wellenzapfen 16 und 17 aufeinander zustellbar gelagert. In der erfindungsgemäßen Anordnung besteht der Magnetkreis aus dem durchgehenden in einer Richtung durchfluteten, zylindrischen Magnetkern 4, den flanschförmig vom Magnetkern abgehenden Magnetschenkeln 5 und dem zylindrischen Magnetmantel 7 auf der Seite der aktiven Walze 2, dem durchgängig in einer Richtung durchfluteten Magnetmantel 6 auf der Seite der passiven Walze 1 und der aktiven Zone mit dem Luftspalt 8 zwischen den Magnetmänteln 6 und 7.

Der Luftspalt 8 ist der eigentliche Arbeitsluftspalt im Magnetkreis der Walzenanordnung. In diesem Luftspalt wird beim Durchtritt des magnetischen Flusses eine Anziehungskraft zwischen den beiden Walzen 1 und 2 erzeugt, die bestrebt ist, die Länge des Flußweges durch den Luftspalt zu verkürzen.
Diese Kraft wirkt als Preßkraft auf den Arbeitsspalt 13 der Walzenanordnung. Sie ist proportional dem Quadrat der Flußdichte und der Querschnittsfläche des Luftspaltes 8 in der Symmetrieebene der aktiven Zone α.

Maßgebend für die eletromagnetisch wirksame Größe des Luftspalts 8 sind die Arbeitsbeläge 8.1 und 8.2 der Walzen 1 und 2, die in diesem Ausführungsbeispiel unmittelbar auf die Magnetmäntel 6 und 7 aufgebracht sind. Je dicker diese Arbeitsbeläge sind, desto höher wird die für die Erzeugung einer gewünschten Preßkraft die erforderliche Erregerleistung.

Außer dem Arbeitsluftspalt 8 sind in dem Magnetkreis weitere Luftspalte vorgesehen. Sie dienen der Verteilung und Lenkung des magnetischen Flusses. Als Luftspalt wird dabei im folgenden ein zwischen zwei sich gegenüberliegenden Oberflächen benachbarter magnetischer Körper befindlicher Spalt aus nichtmagnetischem Material bezeichnet.
Der Magnetmantel 7 der aktiven Walze 2 besteht in seinem radialen Aufbau aus den radial benachbarten koaxialen Zylindern 7.1 und 7.2 und dem zwischen diesen Zylindern angeordneten zylindrischen Luftspalt 7.3 konstanter Breite. Im axialen Aufbau des Magnetmantels 7 bilden zwei durch den ringförmigen Nebenluftspalt 11 voneinander getrennte, gleich große Magnetmantelteile 9 und 10 die aktiven Pole des Magnetkreises.
Der Magnetkern 4, die Magnetschenkel 5 und der radial innere Zylinder 7.1 des Magnetmantels 7 bestehen aus massivem feromagnetischen Material. Der äußere Zylinder 7.2 des Magnetmantels ist aus kreisringförmigen, elektrisch voneinander isolierten magnetischen Blechen bzw. Platten aufgebaut, die axial aneinander geschichtet und zu einem für sich tragfähigen Paket zusammengepreßt bzw. verklebt sind.
Der Magnetmantel 6 der magnetisch passiven Walze ist aus zwei radial kegelförmig aneinandergrenzenden Zylindern 6.1 und 6.2 aufgebaut. Dabei nimmt der Außendurchmesser des radial inneren Zylinders 6.1 bzw. der Innendurchmesser des radial äußeren Zylinders 6.2 von den Rändern zur Mitte der Walze hin ab. Zwischen beiden Zylindern ist zweckmäßig ein sehr schmaler, kegelförmiger Luftspalt 6.3 angeordnet.

Der radial innere Zylinder 6.1 ist aus bandförmigem, elektrisch isoliertem Magnetmaterial auf einem Tragrohr 12 aus nichtmagnetischem Material aufgewickelt.
Der radial äußere Zylinder 6.2 ist aus kreisringförmigen Blechen bzw. Platten aufgebaut, die analog zum Zylinder 7.2 axial aneinander geschichtet und zusammengepreßt bzw. verklebt sind.

Der Magnetmantel 6 der passiven Walze bildet den axial durchgängigen Rückschluß des Magnetkreises, der den Arbeitsluftspalt 8 auf seiner ganzen Länge und Tiefe vollständig abdeckt. Damit kann sich in Walzenlängsrichtung zwischen den Walzen ein Luftspaltfeld ausbilden, das über den aktiven Polen des Magnetkreises entgegengesetzt gleich groß und längs der Magnetmantelteile (Polflächen) 9 und 10 konstant ist. Die durch dieses Luftspaltfeld im Arbeitsspalt 13 zwischen den Walzen 1 und 2 pro Längeneinheit erzeugte Anpreßkraft ist somit in Walzenlängsrichtung ebenfalls konstant.
Nur im axialen Bereich des Nebenluftspaltes 11 wird die Anpreßkraft nicht "vor Ort" erzeugt. Sie muß daher über die Magnetmäntel 6 und 7 sowie eine tragende, den Nebenluftspalt 11 ausfüllende Brücke von den Polflächen 9 und 10 auf dieses axiale Gebiet des Arbeitsspaltes 13 mechanisch übertragen werden.
In eben diesem Gebiet, d.h. in axialer Mitte der Walzen 1 und 2, ist die Erregerwicklung 3 symmetrisch zum ringförmigen Nebenluftspalt 11 angeordnet, wo sie den Kern 4 zwischen zwei flanschförmigen Magnetschenkeln 5 zylinderförmig umschließt.

Mit dieser Anordnung der Erregerwicklung wird ein symmetrischer Aufbau des Magnetfeldes im Magnetkreis der Walzenanordnung und eine gleichmäßige Verteilung des magnetischen Flusses auf die einzelnen Bauteile ermöglicht.

Die magnetische Durchflutung des Magnetkreises wird durch den elektrischen Strom in der Erregerwicklung hervorgerufen. Damit wird die magnetische Urspannung erzeugt, die den Fluß auf seinem Weg durch den Magnetkreis antreibt und dabei als Umlaufspannung verbraucht wird. Wegen der hohen Permeabilität des Magnetmaterials fällt dabei die Umlaufspannung nur über den Wegstrecken ab, die durch Luftspalte verlaufen. Dadurch bilden sich an den sich gegenüberliegenden Grenzflächen der Luftspalte konstante magnetische Potentiale unterschiedlicher Höhe aus. Deshalb ist die magnetische Feldstärke längs eines Luftspaltes immer konstant. Aus diesem Grunde muß sich der magnetische Fluß zwangsläufig gleichmäßig längs eines Luftspaltes verteilen.

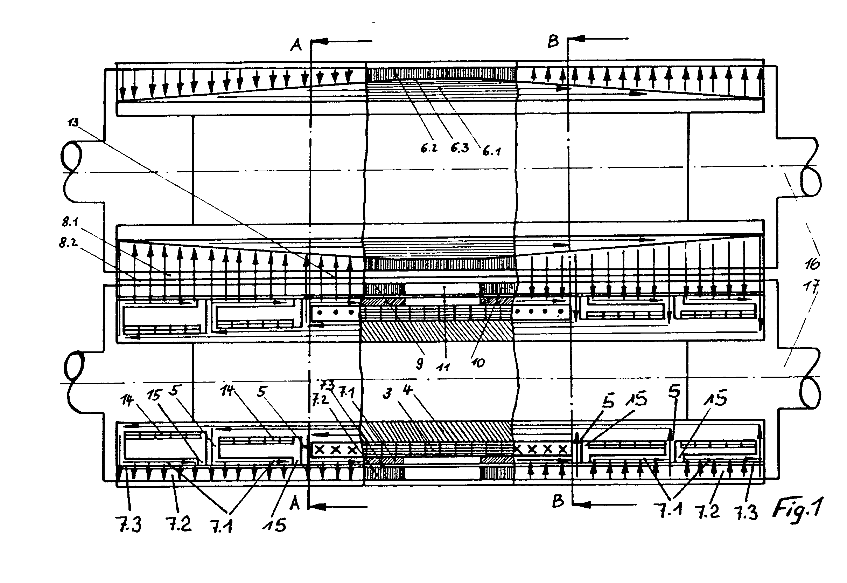

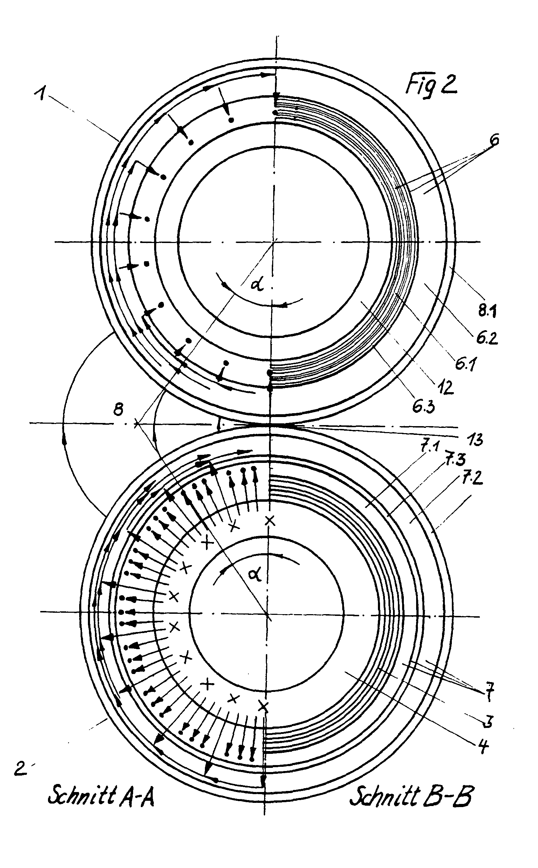

Die Flußverteilung im erfindungsgemäßen magnetischen Kreis ist in Fig. 1 im Längsschnitt und in Fig. 2 im Querschnitt der Walzenanordnung schematisch dargestellt.
Der im Magnetkern 4 gebündelte magnetische Fluß tritt auf der einen Polseite aus der Erregerwicklung 3 aus und verteilt sich in Umfangsrichtung gleichmäßig auf die flanschförmigen Magnetschenkel 5.

Diese gleichmäßige Flußverteilung wird durch den zylinderförmigen Luftspalt 7.3 des Magnetmantels 7 erzwungen.
Dorthin gelangt der magnetische Fluß durch den inneren Zylinder des Magnetmantels, wo er sich nach Maßgabe konstanter Feldstärke längs des Luftspaltes axial gleichmäßig verteilt. Dabei wird er aus der axialen in die radiale Strömungsrichtung umgelenkt.

Der über die ganze Mantelfläche des Luftspaltes gleichmäßig verteilte Fluß tritt nun in den äußeren Zylinder des Magnetmantels ein und wird dort in Umfangsrichtung auf den Arbeitsluftspalt 8 des Magnetkreises hin umgelenkt. Dabei nimmt die Flußdichte im äußeren Zylinder 7.2 des Magnetmantels 7 in Umfangsrichtung bis in das Grenzgebiet der aktiven Zone α des Magnetkreises zu.
Innerhalb der aktiven Zone α tritt der Fluß an dem durch den Magnetmantelteil 9 gebildeten aktiven Pol des Magnetkreises in radialer Richtung durch den Arbeitsluftspalt 8 in den Magnetmantel 6 der passiven Walze 1 über.
Im äußeren Zylinder 6.2 des Magnetmantels 6 wird der Fluß in Umfangsrichtung umgelenkt. Dabei verteilt sich der Fluß gleichmäßig am inneren Umfang des äußeren Zylinders 6.2 des Magnetmantels 6. Gleichzeitig wird er in radialer Richtung zum inneren Zylinder 6.1 des Magnetmantels 6 hin umgelenkt. Durch den kegelförmigen Luftspalt 6.3 tritt der Fluß in den inneren Zylinder 6.1 des Magnetmantels 6 ein. Dabei wird er aus der radialen in die axiale Strömungsrichtung umgelenkt. Infolge der radialen Zuflüsse aus dem äußeren Zylinder 6.2 wächst der Fluß zur axialen Mitte des Magnetmantels 6 hin an. In gleicher Richtung nimmt aber auch der Außendurchmesser des inneren Zylinders zu, so daß Flußdichte und Materialbelastung konstant bleiben.
Auf der anderen Hälfte des Magnetmantels 6 nimmt der Fluß im inneren Zylinder 6.1 infolge der am Umfang gleichmäßig verteilten radialen Abflüsse in den äußeren Zylinder 6.2 wieder ab. Entsprechend wird hier der Außendurchmesser des inneren Zylinders zum Walzenende hin wieder kleiner.
Im äußeren Zylinder 6.2 wird der durch den kegelförmigen Luftspalt 6.3 radial aus dem inneren Zylinder 6.1 austretende Fluß in Umfangsrichtung zur aktiven Zone α hin umgelenkt. Von dort tritt er an dem durch den Magnetmantelteil 10 gebildeten aktiven Pol des Magnetkreises durch den Arbeitsluftspalt 8 hindurch wieder in den Magnetmantel 7 der magnetisch aktiven Walze 2 ein. Vom äußeren Zylinder 7.2 gelangt der Fluß -.bei weiter gleichmäßiger Verteilung auf alle betroffenen Bauteile - durch den zylinderförmigen Luftspalt 7.3, über den inneren Zylinder 7.1 und die flanschförmigen Magnetschenkel 5 wieder zurück in den Magnetkern 4, wo sich unter der Erregerwicklung 3 die Umlaufwege aller Flußlinien schließen.
Da der magnetische Fluß im Magnetkern mit der Entfernung von der Erregerwicklung hinter jedem der flanschförmigen Magnetschenkel 5 um den Betrag des radialen Ab- bzw. Zuflusses abnimmt, kann analog zum inneren Zylinder 6.1 des Magnetmantels 6 der flußleitende Querschnitt des Kerns 4 zu den Enden der Walze 2 hin stufenweise verjüngt werden. Wie in Fig. 1 auf einer Hälfte der aktiven Walze 2 gezeigt ist, kann damit eine wesentlich bessere Ausnutzung des Kernmaterials und eine bedeutend geringere Masse des Magnetkerns erreicht werden.
Soll sich die magnetische Feldstärke im Arbeitsluftspalt 8 in Walzenlängsrichtung ändern, z.B. um eine zu den Walzenenden hin abnehmende Preßkraft im Arbeitsspalt 13 der Walzen zu erhalten, so sind hierfür die Steuerwicklungen 14 vorgesehen, die in diesem Fall in dem zur Erregerwicklung entgegengesetzten Sinne zu erregen sind. Damit wird in der Steuerwicklung eine zur Erregerwicklung entgegengerichtete Durchflutung hervorgerufen. Um aus dieser Gegendurchflutung eine auf den gesamten Magnetkreis wirkende magnetische Gegenurspannung zu erzeugen, ist im inneren Zylinder 7.1 über jeder Steuerwicklung 14 jeweils ein ringförmiger Steuerluftspalt 15 vorgesehen. Dieser Steuerluftspalt ist zweckmäßig mindestens doppelt so breit wie der zylinderförmige Luftspalt 7.3, aber nicht breiter als der Arbeitsluftspalt 8.
Damit wird auf jedem beliebigen Umlaufweg durch das Magnetfeld, der die Steuerwicklung einschließt, die treibende magnetische Urspannung um den Betrag der Gegendurchflutung vermindert. Die magnetische Feldstärke im Arbeitsluftspalt wird dadurch im axialen Bereich der Steuerwicklung, genauer im axialen Bereich zwischen zwei Steuerluftspalten, entsprechend abgesenkt. Auch der Fluß im Magnetkern wird dadurch entsprechend verringert. Er wechselt dabei aber an keiner Stelle seine Richtung, solange die Gegendurchflutung der Steuerwicklungen nicht größer als die Durchflutung der Erregerwicklung ist.

## Patentansprüche

1. Elektromagnetische Walzenanordnung zur Erzeugung eines Preßdrucks für die Behandlung von bahnförmigen Materialien, mit einem Magnetkreis, der zwei sich achsparallel gegenüberliegende, durch einen Arbeitsspalt mechanisch voneinander getrennte Walzen (1, 2) magnetisch untereinander verbindet, wobei dieser Magnetkreis in der einen Walze (2) aus einem zylindrischen Magnetkern (4) und mehreren von diesem Kern radial nach außen abgehenden, flanschförmigen Magnetschenkeln (5) und in der anderen Walze (1) aus einem magnetischen Rückschluß am äußeren Umfang besteht, wobei Erregerwicklungen (3) den Magnetkern (4) der einen Walze (2) koaxial umschließend zwischen den flanschförmigen Magnetschenkeln (5) des Magnetkreises angeordnet sind und voneinander getrennte, beliebig zusammenschaltbare Anschlüsse besitzen, **dadurch gekennzeichnet, daß** am äußeren Umfang beider Walze (1, 2), axial mindestens im Bereich der Erregerwicklungen (3), je ein den ganzen Umfang der Walze (1, 2) einhüllender Magnetmantel (6, 7) angeordnet ist, wobei der Magnetmantel (7) der einen Walze (2), welche die Erregerwicklungen (3) enthält, durch einen ringförmigen magnetischen Luftspalt (11) in zwei vorzugsweise gleichgroße, axial benachbarte Magnetmantelteile (9, 10) aufgetrennt ist, und der ringförmige Luftspalt (11) bedeutend breiter als der Arbeitsluftspalt (8) zwischen den sich radial gegenüberliegenden Magnetmänteln (6, 7) der beiden Walzen (1, 2), aber nicht wesentlich breiter, vorzugsweise schmaler als einer der Magnetmantelteile (9, 10) ist, und daß die Erregerwicklungen (3) hinsichtlich des magnetischen Feldes axial symmetrisch oder annähernd symmetrisch zu dem ringförmigen Luftspalt (11) angeordnet und vom Erregerstrom magnetisch gleichsinnig durchflutet sind, so daß der Magnetkern (4) axial durchgängig in einer Richtung magnetisiert ist, und daß die Magnetmäntel (6,7) durch weitere magnetische Luftspalte (6.3, 7.3) aus einem nichtmagnetischen und vorzugsweise elektrisch isolierendem Material jeweils in zwei zueinander koaxial angeordneten Zylinder (6.1, 6.2 und 7.1, 7.2) aufgeteilt sind.

2. Elektromagnetische Walzenanordnungen nach Anspruch 1, **dadurch gekennzeichnet, daß** der Magnetkern (4) nur auf den in axialer Mitte der Walze (2) zwischen zwei flanschförmigen Magnetschenkeln (5) befindlichen Teilstücken mit den Erregerwicklungen (3) versehen ist.

3. Elektromagnetische Walzenanordnung nach Ansprüchen 1 bis 2, **dadurch gekennzeichnet, daß** von den Erregerwicklungen (3) ausgehend der flußleitende Querschnitt des Magnetkerns (4) zu den Enden der Walze (2) in Stufen abnimmt.

4. Elektromagnetische Walzenanordnung nach Ansprüchen 1 bis 3, **dadurch gekennzeichnet, daß** in Achsrichtung beidseitig zu den vorzugsweise in axialer Mitte der Walze (2) angeordneten Erregerwicklungen (3) für die Erzeugung des magnetischen Feldes jeweils mindestens eine leistungsschwächere Steuerwicklung (14) zur Steuerung der Feldstärkeverteilung längs eines Arbeitsspaltes (13) vorgesehen ist, und daß der Magnetmantel (7) über jeder dieser Steuerwicklungen (14) einen ringförmige Steuerluftspalt (15) aufweist, der nicht breiter als der Arbeitsluftspalt (8) ist.

5. Elektromagnetische Walzenanordnung nach Ansprüchen 1 bis 4, **dadurch gekennzeichnet, daß** zumindest eine der Walzen (1,2) als feststehender Träger ausgebildet ist und deren Magnetmantel (6,7) darauf drehbar gelagert ist.

6. Elektromagnetische Walzenanordnung nach Ansprüchen 1 bis 5, **dadurch gekennzeichnet, daß** zumindest einer der inneren der koaxialen Zylinder (6.1,7.1) der Magnetmäntel (6, 7) aus massivem ferromagnetischem Material bestehen oder aus band- bzw. bahnförmigem, elektrisch isoliertem, magnetisch leitendem Material aufgewickelt sind und die radial außenliegenden der koaxialen Zylinder (6.2, 7.2) aus kreisringförmigen, in Achsrichtung aneinander geschichteten, elektrisch voneinander isolierten Blechen aus ferromagnetischem Material aufgebaut sind.

7. Elektromagnetische Walzenanordnung nach Ansprüchen 1 bis 5, **dadurch gekennzeichnet, daß** die radial außen liegenden der koaxialen Zylinder (6.2, 7.2) aus streifenförmigen, in Umfangsrichtung aneinander geschichteten, elektrisch voneinander isolierten Blechen aufgebaut sind.

8. Elektromagnetische Walzenanordnung nach Ansprüchen 1 bis 7, **dadurch gekennzeichnet, daß** zumindest einer der weiteren Luftspalte (6.3, 7.3) zylinderförmig ausgestaltet ist und sich axial bis über die flanschförmigen Magnetschenkel (5) des Magnetkreises erstreckt.

9. Elektromagnetische Walzenanordnung nach Anspruch 8, **dadurch gekennzeichnet, daß** die Dicke zumindest eines der weiteren, zylinderförmigen Luftspalte (6.3, 7.3) in Walzenlängsrichtung variabel ist und insbesondere von den flanschförmigen Schenkeln (5) in Richtung auf den axialen Luftspalt (11) hin abnimmt.

10. Elektromagnetische Walzenanordnung nach einem der Ansprüche 4 bis 9, **dadurch gekennzeichnet, daß** der ringförmige Steuerluftspalt (15) im radial inneren Zylinder. (7.1) des Magnetmantels (7) mindestens doppelt so breit wie der weitere zylinderförmige Luftspalt (7.3) der einen Walze (2) ist.

11. Elektromagnetische Walzenanordnung nach einen der Ansprüche 2 bis 9, **dadurch gekennzeichnet, daß** die flanschförmigen Magnetschenkel (5) zumindest in ihren Übergangsbereichen zum Magnetkern (4) und zum inneren Zylinder (7.1) des Magnetmantels (7) der einen Walze (2) aus kreisringförmigen, in Achsrichtung aneinandergeschichteten, elektrisch voneinander isolierten Blechen aufgebaut sind.

12. Elektromagnetische Walzenanordnung nach Ansprüchen 1 bis 5, **dadurch gekennzeichnet, daß** zumindest einer der Magnetmäntel (6,7) insgesamt aus band- bzw. bahnförmigem, elektrisch isoliertem, magnetisch leitendem Material aufgewickelt oder aus am Umfang nebeneinander angeordneten und radial übereinander geschichteten, elektrisch gegeneinander isolierten Zylindersegmenten geringer Wandstärke aufgebaut ist.

13. Elektromagnetische Walzenanordnung nach einem der vorhergehenden Ansprüche, **dadurch gekennzeichnet, daß** an den Magnetmänteln (6, 7) der Walzen (1, 2) Arbeitsbeläge (8.1, 8.2) direkt anliegen.

14. Elektromagnetische Walzenanordnung nach einem der vorhergehenden Ansprüche, **dadurch gekennzeichnet, daß** die Arbeitsbeläge (8.1, 8.2) der Walzen (1, 2) durch Beimischungen ferromagnetischer Partikel eine relative magnetische Permeabilität größer 1 besitzen.

15. Elektromagnetische Walzenanordnung nach einem der vorhergehenden Ansprüche, **dadurch gekennzeichnet, daß** in beiden Walzen (1, 2) Erregerwicklungen (3) angeordnet sind.

16. Elektromagnetische Walzenanordnung nach einem der vorhergehenden Ansprüche, **dadurch gekennzeichnet, daß** die Walzenanordnung aus mehreren axial nebeneinander angeordneten, jede für sich uneingeschränkt funktionsfähigen Walzen (1,2) aufgebaut ist.

17. Elektromagnetische Walzenanordnung nach Ansprüchen 1 bis 17, **dadurch gekennzeichnet, daß** der Magnetkern (4) als Hohlzylinder ausgebildet ist und der zylindrische Hohlraum als aktiver oder passiver Kühlkanal zur Abführung der Stromwärmeverluste dient.

## Claims

1. An electromagnetic roller arrangement capable of producing a pressure for processing webs of material comprising a magnetic circuit that magnetially connects two axis-parallel rollers (1,2) mutual facing each other and being mechanially separated by an operating gap, this magnetic circuit consisting of a cylindrical magnetic core (4) and several flange shaped radially extending magnetic legs (5) in the one roller (2), and of a magnetic yoke at its periphery in the other roller (1),exciting windings (3) being arranged between the flange shaped magnetic legs (5) of the magnetic circuit envelopping the magnetic core (4) of the one roller (2) and comprising terminals separated each from another, which can be connected each to another in any way as required, distinguished by this means, that at the periphery of the roller (1,2), axially at least in the region of the exciting windings (3), there is fitted a magnetic shell (6,7) encasing in each case the roller (1,2) at its circumference, the magnetic shell (7) of the one roller (2) comprising the exciting windings (3) being divided by a ring shaped magnetic air gap (11) in to two partitions of preferentially equal size axially facing each other,the width of the ring shaped air gap (11) being significantly greater than the width of the operating air gap (8) between the magnetic shells (6,7) of both the rollers (1,2) radially facing each other, but not essentially greater, preferentially smaller than one of the magnetic shell partitions (9,10), and that the exciting windings (3) as to the magnetic field and their axial position are arranged symmetrically or approximate symmetrically with regard to the ring shaped air gap (11) and are charged by the electric current in the same magnetic active direction, thus the magnetic core being axially magnetized in one direction,only , and that the magnetic shells (6,7) in each case are divided in to two coaxially arranged cylinders by additional magnetic air gaps (6.3,7.3) consisting of nonmagnetic,preferentially electrically isolating material.

2. An electromagnetic roller arrangement according to claim 1 distinguished by this means, that the magnetic core (4) is provided with exciting windings (3) at the partition between two flange shaped legs in the axial middle of the roller(2),only.

3. An electromagnetic roller arrangement according to claims 1 to 2 distinguished by this means, that starting from windings (3) the cross section of the core (4) conducting the magnetic flux decreases to the ends of the roller (2),step by step.

4. An electromagnetic roller arrangement according to claims 1 to 3 distinguished by this means, that on both sides of the exciting windings (3) preferentially situated in the middle of the roller (2) for producing the magnetic field, in each case there is provided at least one controlling winding (14) of lower power to control the field strength distribution along an operational nip gap (13) , and that the magnetic shell (7) has a ring shaped controlling air gap (15) above any of these controlling windings (14), which is not wider than the operational air gap (8).

5. An electromagnetic roller arrangement according to claims 1 to 4, distinguished by this means, that at least one of the rollers (1,2) is designed as an fixed beam , and that its magnetic shell (6,7) is pivoted on it.

6. An electromagnetic roller arrangement according to claims 1 to 5, distinguished by this means, that at least one of the inner coaxial cylinders (6.1,7.1) of the magnetic shells (6,7) consists of massive ferromagnetic material or is winded up from tape- or web -shaped, electrically isolated, magnetically conducting material , and that the coaxial cylinders (6.2,7.2) placed radially outward are built up by stacking in axial direction annular sheets of ferromagnetic material, electrically isolated from each other.

7. An electromagnetic roller arrangement according to claims 1 to 5, distinguished by this means, that the outward placed coaxial cylinders (6.2,7.2) are built by stacking up in peripherical direction strip shaped sheets,which are electrically isolated from each other.

8. An electromagnetic roller arrangement according to claims 1 to 7, distinguished by this means, that at least one of the additional airgaps (6.3,7.3) is cylinder shaped and axially extents up to the flange shaped magnetic legs (5) of the magnetic circuit, inclusively.

9. An electromagnetic roller arrangement according to claim 8, distinguished by this means, that the thickness of at least one of the additional air gaps (6.3,7.3) is variable in direction of roller length, declining from the flange shaped legs (5) to the axial airgap(11), preferentially.

10. An electromagnetic roller arrangement according to claims 4 to 9, distinguished by this means, that the ring shaped controlling air gap (15) within the radially inward cylinder (7.1) of the magnetic shell (7) has at least double the thickness of the additional cylinder shaped air gap (7.3) of the one roller (2).

11. An electromagnetic roller arrangement according to claims 2 to 9, distinguished by this means, that the flange shaped magnetic legs (5) at least in their transition regions to the magnetic core and to the radially inward cylinder (7.1) of the magnetic shell (7) of the one roller (2) is built up by stacking in axial direction ring shaped sheets being electrically isolated from each other.

12. An electromagnetic roller arrangement according to claims 1 to 5, distinguished by this means, that at least one of the magnetic shells (6,7) wholly is built up by winding up strip- or web- shaped magnetically conductible, electrically isolating material or by arranging side by side on the circumference and in layers radially one upon the other thin cylinder segments being electrically isolated from each other.

13. An electromagnetic roller arrangement according to one of the preceding claims distinguished by this means, that operating layers (8.1,8.2) fit tight to the magnetic shells (6,7) of the rollers (1,2).

14. An electromagnetic roller arrangement according to one of the preceding claims distinguished by this means, that the operating layers (8.1,8.2) of the rollers (1,2) get a relative permeability greater than 1 by admixing ferromagnetic particles.

15. An electromagnetic roller arrangement according to one of the preceding claims distinguished by this means, that exciting windings (3) are arranged in both rollers (1,2).

16. An electromagnetic roller arrangement according to one of the preceding claims distinguished by this means, that the roller arrangement is built up of several rollers (1,2) being arranged side by side, each roller (1,2) being fit to work by itself without restrictions.

17. An electromagnetic roller arrangement according to claims 1 to 17, distinguished by this means, that the magnetic core is hollow- cylinder- shaped, the cylindrical hollow being used as an active or passive cooling channel for removing the electrical power losses.

## Revendications

1. Disposition de rouleaux électromagnétiques pour la génération d'une pression de compression pour le traitement de matériaux en forme de glissière, munie d'un circuit magnétique reliant ensemble mécaniquement deux rouleaux (1, 2) opposés l'un à l'autre parallèlement à un axe et séparés l'un de l'autre mécaniquement par un entrefer de travail, ce circuit magnétique se composant, dans l'un des rouleaux (2), d'un noyau magnétique cylindrique (4) et de plusieurs branches magnétiques (5) en forme de bride partant radialement de ce noyau vers l'extérieur et, dans l'autre rouleau (1), d'un guidage magnétique se trouvant sur le pourtour extérieur, des enroulements inducteurs (3) étant disposés, en entourant coaxialement le noyau magnétique de l'un des rouleaux (2), entre les branches magnétiques (5) en forme de bride du circuit magnétique et possédant des branchements séparés les uns des autres et susceptibles d'être interconnectés au choix, **caractérisée par le fait qu**'une enveloppe magnétique (6, 7) entourant tout le pourtour du rouleau (1, 2) est à chaque fois disposée sur le pourtour extérieur du rouleau (1, 2) en étant axiale au moins dans le domaine des enroulements inducteurs (3), l'enveloppe magnétique (7) de l'un des rouleaux (2) comprenant les enroulements inducteurs (3) étant divisée par un entrefer magnétique annulaire (11) en deux éléments d'enveloppe magnétique (9, 10) axialement adjacents et de préférence de même taille, et l'entrefer annulaire (11) étant considérablement plus large que l'entrefer (8) situé entre les enveloppes magnétiques (6, 7) radialement opposées l'une à l'autre des deux rouleaux (1, 2), mais n'étant pas sensiblement plus large, de préférence plus étroit que l'un des éléments d'enveloppe magnétiques (9, 10), et que les enroulements inducteurs (3) sont disposés en ce qui concerne le champ magnétique de façon à être axialement symétriques ou approximativement symétriques par rapport à l'entrefer annulaire (11) et sont traversés par le courant excitateur dans le même sens d'un point de vue magnétique de telle façon que le noyau magnétique (4) est magnétisé axialement en continu dans une direction, et que les enveloppes magnétiques (6, 7) sont divisées, par d'autres entrefers magnétiques (6.3, 7.3) se composant d'un matériau étant de préférence isolant électriquement et non magnétique, en chaque fois deux cylindres (6.1, 6.2 et 7.1, 7.2) disposés coaxialement l'un par rapport à l'autre.

2. Disposition de rouleaux électromagnétiques selon la revendication 1, **caractérisée par le fait que** le noyau magnétique (4) est pourvu des enroulements inducteurs (3) seulement sur les parties se trouvant au centre de l'axe du rouleau (2) entre deux branches magnétiques (5) en forme de bride.

3. Disposition de rouleaux électromagnétiques selon les revendications 1 à 2, **caractérisée par le fait que** la section transversale conductrice de flux du noyau magnétique (4) décroît graduellement en partant des enroulements inducteurs (3) vers les extrémités du rouleau (2).

4. Disposition de rouleaux électromagnétiques selon les revendications 1 à 3, **caractérisée par le fait qu**'au moins un enroulement de commande (14) d'une puissance plus faible destiné à commander la répartition de l'intensité du champ le long d'un entrefer de travail (13) est prévu dans le sens axial des deux côtés des enroulements inducteurs (3) disposés de préférence au centre de l'axe du rouleau (2) et destinés à générer le champ magnétique, et que l'enveloppe magnétique (7) présente un entrefer de commande annulaire (15) au-dessus de chacun de ces enroulements de commande (14), l'entrefer de commande n'étant pas plus large que l'entrefer de travail (8).

5. Disposition de rouleaux électromagnétiques selon les revendications 1 à 4, **caractérisée par le fait qu**'au moins l'un des rouleaux (1, 2) est développé en support fixe et son enveloppe magnétique (6, 7) est logée dessus ce dernier de façon susceptible de tourner.

6. Disposition de rouleaux électromagnétiques selon les revendications 1 à 5, **caractérisée par le fait qu**'au moins l'un des cylindres intérieurs coaxiaux (6.1, 7.1) des enveloppes magnétiques (6, 7) se compose d'un matériau ferromagnétique massif ou est un enroulement composé d'un matériau en forme de glissière ou bien de ruban, isolé électriquement et conducteur d'un point de vue magnétique, et les cylindres coaxiaux (6.2, 7.2) situés radialement à l'extérieur sont construits à partir de tôles en forme d'anneau de cercle isolées les unes des autres électriquement, disposées en couches dans le sens axial et composées d'un matériau ferromagnétique.

7. Disposition de rouleaux électromagnétiques selon les revendications 1 à 5, **caractérisée par le fait que** les cylindres coaxiaux situés radialement à l'extérieur (6.2, 7.2) se composent de tôles en forme de bande, isolées les unes des autres électriquement et disposées en couches dans le sens circonférentiel.

8. Disposition de rouleaux électromagnétiques selon les revendications 1 à 7, **caractérisée par le fait qu**'au moins l'un des autres entrefers (6.3, 7.3) est configuré en forme de cylindre et s'étire axialement jusque par dessus les branches magnétiques (5) en forme de bride du circuit magnétique.

9. Disposition de rouleaux électromagnétiques selon la revendication 8, **caractérisée par le fait que** l'épaisseur d'au moins l'un des autres entrefers cylindriques (6.3, 7.3) est variable dans le sens longitudinal du rouleau et décroît notamment en partant des branches (5) en forme de bride en direction de l'entrefer axial (11).

10. Disposition de rouleaux électromagnétiques selon l'une des revendications 4 à 9, **caractérisée par le fait que** l'entrefer de commande annulaire (15) situé dans le cylindre intérieur d'un point de vue radial (7.1) de l'enveloppe magnétique (7) est au moins deux fois plus large que l'autre entrefer cylindrique (7.3) de l'un des rouleaux (2).

11. Disposition de rouleaux électromagnétiques selon l'une des revendications 2 à 9, **caractérisée par le fait que** les branches magnétiques (5) en forme de bride sont construites, au moins dans leurs domaines transitoires allant vers le noyau magnétique (4) et vers le cylindre intérieur (7.1) de l'enveloppe magnétique (7) de l'un des rouleaux (2), en tôles en forme d'anneau de cercle, isolées les unes des autres électriquement et disposées en couches dans le sens axial.

12. Disposition de rouleaux électromagnétiques selon les revendications 1 à 5, **caractérisée par le fait qu**'au moins l'une des enveloppes magnétiques (6, 7) est un enroulement entièrement composé d'un matériau en forme de glissière ou bien de ruban, isolé électriquement et conducteur d'un point de vue magnétique ou construite à partir de segments de cylindre de faible épaisseur isolés les uns des autres électriquement, disposés en couches radialement les uns sur les autres ainsi qu'à côté les uns des autres sur le pourtour.

13. Disposition de rouleaux électromagnétiques selon l'une des revendications précédentes, **caractérisée par le fait que** des surfaces de travail (8.1, 8.2) se trouvent directement sur les enveloppes magnétiques (6, 7) des rouleaux (1, 2).

14. Disposition de rouleaux électromagnétiques selon l'une des revendications précédentes, **caractérisée par le fait que** les surfaces de travail (8.1, 8.2) des rouleaux (1, 2) possèdent une perméabilité magnétique relative supérieure à 1 grâce à un rajout de particules ferromagnétiques.

15. Disposition de rouleaux électromagnétiques selon l'une des revendications précédentes, **caractérisée par le fait que** des enroulements inducteurs (3) sont disposés dans les deux rouleaux (1, 2).

16. Disposition de rouleaux électromagnétiques selon l'une des revendications précédentes, **caractérisée par le fait que** la disposition de rouleaux se compose de plusieurs rouleaux (1, 2) disposés axialement les uns à côté des autres qui sont capables de fonctionner chacun pour soi de façon illimitée.

17. Disposition de rouleaux électromagnétiques selon les revendications 1 à 17, **caractérisée par le fait que** le noyau magnétique (4) est développé en cylindre creux et que l'espace creux cylindrique sert de canal de refroidissement actif ou passif destiné à évacuer les pertes par effet Joule.
